# EUROPEAN PATENT APPLICATION

(11) **EP 1 860 322 A2**
(43) Date of publication of application: **28.11.2007**
(21) Application number: 07108512.0
(22) Date of filing: 21.05.2007
(51) Int. Cl.: F03D 11/00, F03D 11/04

(54) **WInd turbine generator and a semi-monocoque structure therefor**

(30) Priority: 25.05.2006 US 420299
(71) Applicant: General Electric Company, Schenectady, NY 12345 (US)
(72) Inventor: Bagepalli, Bharat Sampathkumaran, Niskayuna, NY 12309 (US); Lyons, James Patrick Francis, Niskayuna, NY 12309 (US); Rogall, Peter, 48488, Emsbueren (DE)
(74) Representative: Bedford, Grant Richard

(57) **Abstract**

A wind turbine generator (100) includes at least one rotating member and a semi- monocoque nacelle structure (200) that includes at least one stationary member extending over at least a portion of the rotating member. During operation the wind turbine generator transmits loads to the semi-monocoque nacelle structure.

## Description

This invention relates generally to rotary machines and more particularly, to methods and apparatus for assembling and operating wind turbine nacelles.

Generally, a wind turbine generator includes a rotor having multiple blades. The blades, attached to rotatable hubs on these rotors, transform mechanical wind energy into a mechanical rotational torque that drives one or more generators. The generators are generally, but not always, rotationally coupled to the rotor through a gearbox. The gearbox steps up the inherently low rotational speed of the turbine rotor for the generator to efficiently convert the rotational mechanical energy to electrical energy, which is fed into a utility grid. Gearless direct drive wind turbine generators also exist. The rotor, generator, gearbox and other components are typically mounted within a housing, or nacelle, that is positioned on top of a base that may be a truss or tubular tower.

Some known nacelle configurations introduce substantial weight at the top of the wind turbine tower in order to facilitate support for the wind turbine components positioned within. The associated load support features of these nacelles facilitate increased weight at the top of the wind tower. The increased weight tends to increase capital and operational costs.

In one aspect according to the present invention, a wind turbine generator is provided. The wind turbine generator includes at least one rotating member and a semi-monocoque nacelle structure comprising at least one stationary member extending over at least a portion of the rotating member.

In another aspect, a method of operating a rotary machine is provided. The method includes transmitting loads to a semi-monocoque structure, transmitting loads from a component housing to at least one circumferential member, transmitting loads from the circumferential member to a structure outer shell, transmitting loads from the circumferential member to at least one longitudinal member, and transmitting loads from the longitudinal member to the outer shell.

In a further aspect, a semi-monocoque structure for a rotary machine is provided. The structure includes an outer shell extending over at least a portion of the structure, wherein the shell includes an inner surface. The structure also includes at least one circumferential member coupled to the shell surface. The structure further includes at least one longitudinal member coupled to the shell surface and the circumferential member.

Various aspects and embodiments of the present invention will now be described in connection with the accompanying drawings, in which:
Figure 1 is a schematic illustration of an exemplary wind turbine generator;
Figure 2 is a fragmentary cross-sectional schematic view of a nacelle that may be used with the exemplary wind turbine generator shown in Figure 1;
Figure 3 is a fragmentary cross-sectional axially skewed schematic view of an exemplary semi-monocoque structure that may be used with the nacelle shown in Figure 2;
Figure 4 is an expanded schematic view of a portion of the exemplary semi-monocoque structure shown in Figure 3 taken along area 4;
Figure 5 is a fragmentary schematic view of an alternative semi-monocoque structure that may be used with the nacelle shown in Figure 2; and
Figure 6 is a fragmentary cross-sectional schematic view of an alternative semi-monocoque structure that may be used with the nacelle shown in Figure 2.

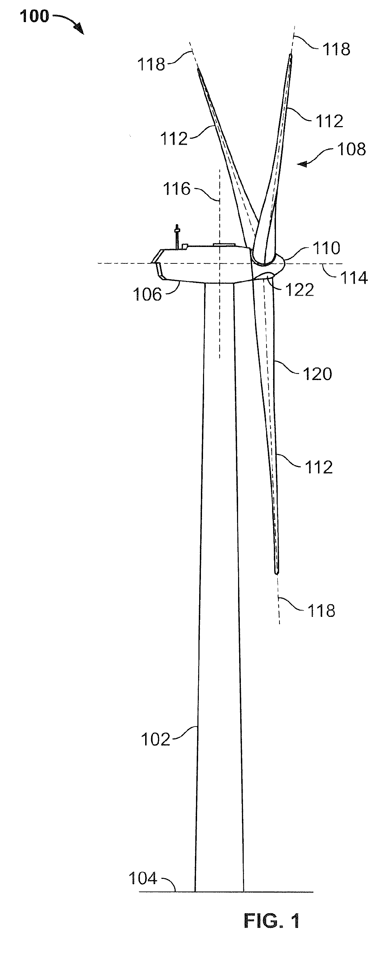

Figure 1 is a schematic illustration of an exemplary wind turbine generator 100. In the exemplary embodiment, wind turbine generator 100 is a horizontal axis wind turbine. Alternatively, wind turbine 100 may be a vertical axis wind turbine. Wind turbine 100 has a tower 102 extending from a supporting surface 104, a nacelle 106 mounted on tower 102, and a rotor 108 coupled to nacelle 106. Rotor 108 has a rotatable hub 110 and a plurality of rotor blades 112 coupled to hub 110. In the exemplary embodiment, rotor 108 has three rotor blades 112. In an alternative embodiment, rotor 108 may have more or less than three rotor blades 112. In the exemplary embodiment, tower 102 is fabricated from tubular steel and has a cavity (not shown in Figure 1) extending between supporting surface 104 and nacelle 106. In an alternate embodiment, tower 102 is a lattice tower. The height of tower 102 is selected based upon factors and conditions known in the art.

Blades 112 are positioned about rotor hub 110 to facilitate rotating rotor 108 to transfer kinetic energy from the wind into usable mechanical energy, and subsequently, electrical energy. Blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in blades 112 are transferred to hub 110 via load transfer regions 122.

In the exemplary embodiment, blades 112 have a length between 50 meters (m) (164 feet (ft)) and 100 m (328 ft). Alternatively, blades 112 may have any length. As the wind strikes blades 112, rotor 108 is rotated about rotation axis 114. As blades 112 are rotated and subjected to centrifugal forces, blades 112 are subjected to various bending moments and other operational stresses. As such, blades 112 may deflect and/or rotate from a neutral, or non-deflected, position to a deflected position and associated stresses, or loads, may be induced in blades 112. Moreover, a pitch angle of blades 112, i.e., the angle that determines blades 112 perspective with respect to the direction of the wind, may be changed by a pitch adjustment mechanism (not shown in Figure 1) to facilitate increasing or decreasing blade 112 speed by adjusting the surface area of blades 112 exposed to the wind force vectors. Pitch axis 118 for blades 112 are illustrated. In the exemplary embodiment, the pitches of blades 112 are controlled individually. Alternatively, blades 112 pitch may be controlled as a group.

In some configurations, one or more microcontrollers in a control system (not shown in Figure 1) are used for overall system monitoring and control including pitch and rotor speed regulation, yaw drive and yaw brake application, and fault monitoring. Alternatively, distributed or centralized control architectures are used in alternate embodiments of wind turbine 100.

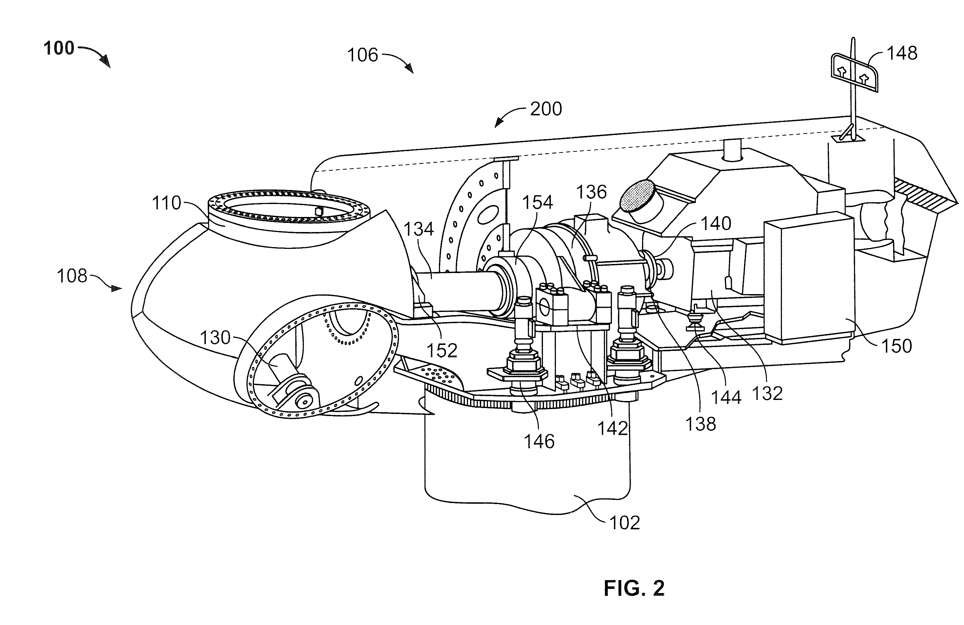

Figure 2 is a fragmentary cross-sectional schematic view of nacelle 106 of exemplary wind turbine 100. Various components of wind turbine 100 are housed in nacelle 106 atop tower 102 of wind turbine 100. Pitch drive mechanisms 130 (only one illustrated in Figure 2) modulates the pitch of blades 112 along pitch axis 118 (both shown in Figure 1).

Rotor 108 is rotatably coupled to an electric generator 132 positioned within nacelle 106 via rotor shaft 134, sometimes referred to as low speed shaft 134, a gearbox 136, a high speed shaft 138, and a coupling 140. Rotation of shaft 134 rotatably drives gearbox 136 that subsequently rotatably drives shaft 138. Shaft 138 rotatably drives generator 132 via coupling 140 and shaft 138 rotation facilitates generator 132 production of electrical power. Gearbox 136 and generator 132 are supported by supports 142 and 144, respectively. In the exemplary embodiment, gearbox 136 utilizes a dual path geometry to drive high speed shaft 138. Alternatively, main rotor shaft 134 is coupled directly to generator 132 via coupling 140.

Also positioned in nacelle 106 is a yaw adjustment mechanism 146 that may be used to rotate nacelle 106 and rotor 108 on axis 116 (shown in Figure 1) to control the perspective of blades 112 with respect to the direction of the wind. Mechanism 146 is coupled to nacelle 106. Meteorological mast 148 includes a wind vane and anemometer (neither shown in Figure 2). Mast 148 is positioned on nacelle 106 and provides information to the turbine control system that may include wind direction and/or wind speed. A portion of the turbine control system resides within control panel 150.

Moreover, forward and aft support bearings 152 and 154, respectively, are positioned within and are supported by nacelle 106. Bearings 152 and 154 facilitate radial support and alignment of shaft 134. In the exemplary embodiment, nacelle 106 includes a semi-monocoque nacelle structure 200, discussed further below.

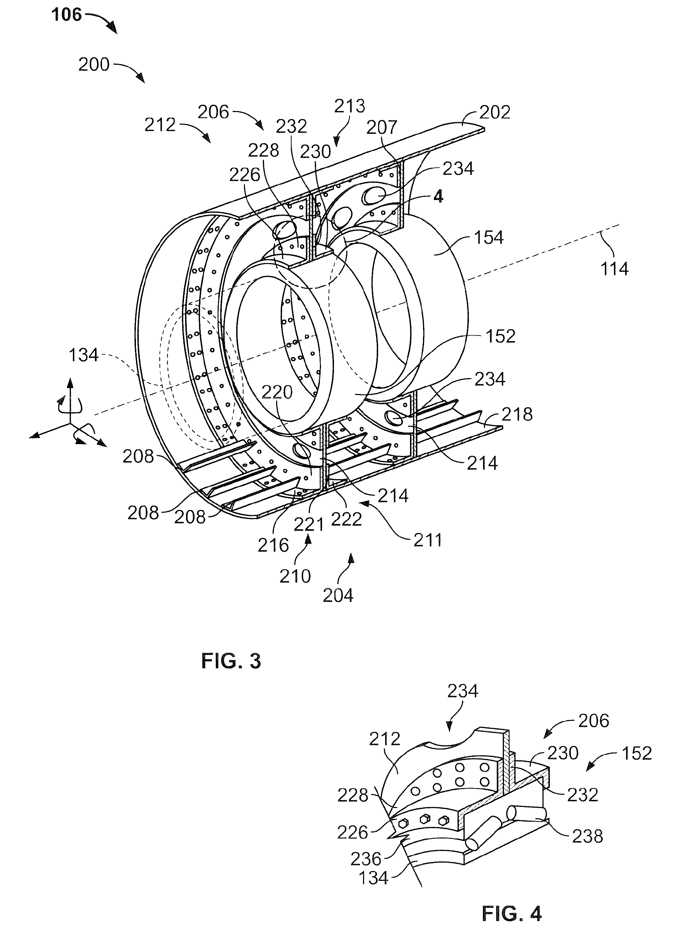

Figure 3 is a fragmentary cross-sectional axially skewed schematic view of exemplary semi-monocoque structure 200 that may be used with nacelle 106. The term "monocoque" typically refers to a structure that is configured to use a thin outer shell, or skin, wherein a substantial portion of the overall mechanical weight and stress loading of the structure is carried by the outer shell with little to no internal support features. A monocoque configuration may be compared to a more typical configuration that utilizes a load-bearing internal framework, for example a spaceframe system (not shown in Figure 3), within a non-load bearing skin that may be formed as a heavy casting. Nacelle structure 200 as described herein is referred to as "semi-monocoque" in that it includes a thin, load-bearing outer shell 202 and a plurality of internal support members 204, i.e., a shell reinforcement and load transfer system 204. System 204 collects loads created by components of wind turbine 100, wherein system 204 transfers these loads to shell 202 such that shell 202 carries substantially all of these loads.

In the exemplary embodiment, outer shell 202 is fabricated from a sturdy, light-weight, material formed into sheets and/or plates (not shown in Figure 3) by metal stamping methods that range from approximately 1 to 20 millimeters (mm) (0.039 to 0.787 inches (in)) in thickness, the thickness being at least partially determined by predetermined wind loads. The materials include, but are not limited to aluminum alloys, steel alloys, fiber-reinforced composites or any other materials that attain predetermined operational parameters. Operational parameters include, but are not limited to, mitigating weight loads at the top of tower 102, providing sufficient material strength to withstand local environmental conditions, collecting loads from system 204 and other components within nacelle 106, efficiently and effectively transferring the loads to base 102 that subsequently transfers the loads to tower supporting surface 104 (both shown in Figure 1), and withstanding the associated shear stresses induced within shell 202 as a result of these loads. In the exemplary embodiment, a weight of nacelle 106 is reduced by approximately 20% to 30% from some known nacelles. Metal stamping methods typically include mass production features using standard forming and machining methods, thereby facilitating a decrease in manufacturing costs. In the exemplary embodiment, the sheets and/or plates are assembled to form outer shell 202 via retention hardware methods that include, but are not limited to, riveting and bolting. Alternatively, welding methods may be used to couple the sheets and/or plates. Also, alternatively, shell 202 may be cast or forged as a unitary member with the aforementioned operational parameters being adhered to.

Internal support members 204, i.e., shell reinforcement and load transfer system 204 includes at least one forward circumferential bulkhead 206 and at least one aft circumferential bulkhead 207 and longitudinal stringers 208 (only three illustrated in Figure 3). System 204 may also include at least one Longeron (not shown in Figure 3).

Bulkhead 206 includes five distinct portions, i.e., a forward radially outer portion 210 an aft radially outer portion 211, a forward radially inner portion 212, an aft radially inner portion 213, and a web portion 214 extending between outer portions 210 and 211 and inner portions 212 and 213. Portion 210 is positioned on the turbine side of nacelle 106 and portion 211 is positioned on the generator side of nacelle 106. Portion 210 includes a concentric portion 216 substantially concentric to and conforming to a shell interior surface 218. Portion 210 also includes an orthogonal portion 220 wherein portion 220 is perpendicular to portion 216 such that a cross-section of portion 210 is similar to a cross-section of standard angle iron. Portion 211 includes a concentric portion 222 and an orthogonal portion 224 that are substantially similar to portions 216 and 220, respectively, with the exception that portion 222 is an axially and circumferentially symmetrical mirror image of portion 216 such that portion 216 of portion 210 and portion 222 of portion 211 extend axially opposite each other. In the exemplary embodiment, portion 210 is fabricated as a unitary member as discussed further below. Alternatively, portion 210 may be formed by fabricating portions 216 and 220 independently and subsequently coupling portions 216 and 220 via methods that include, but are not limited to, welding. Portion 211 is fabricated in a similar manner.

Portion 212 is positioned on the turbine side of nacelle 106 and portion 213 is positioned on the generator side of nacelle 106. Portion 212 includes a concentric portion 226 that is substantially concentric to and conforms to bearings 152 and 154. Portion 212 also includes an orthogonal portion 228 wherein portion 228 is perpendicular to portion 226 such that a cross-section of portion 212 is similar to a cross-section of standard angle iron. Portion 213 includes a concentric portion 230 and an orthogonal portion 232 that are substantially similar to portions 226 and 228, respectively, with the exception that portion 230 is an axially and circumferentially symmetrical mirror image of portion 226 such that portion 226 of portions 212 and portion 230 of portion 213 extend axially opposite each other. In the exemplary embodiment, portion 212 is fabricated as a unitary member as discussed further below. Alternatively, portion 212 may be formed by fabricating portions 226 and 228 independently and subsequently coupling portions 216 and 220 via methods that include, but are not limited to, welding. Portion 213 is fabricated in a similar manner.

Web portion 214 is substantially circular and annular and extends between radially outer portions 210 and 211 and radially inner portions 212 and 213. More specifically, web portion 214 is coupled to and positioned between portions 220 and 224 and coupled to and positioned between portions 228 and 232. Web portion 214 includes a radially outermost surface (not shown in Figure 3) that conforms to surface 218. At least one access passage 234 is defined within web portion 212 to facilitate inspections and other operational activities requiring personnel to occupy and traverse within nacelle 106.

In the exemplary embodiment, bulkhead 207 is substantially similar to bulkhead 206 with the exception that only portions 210, 212 and 214 are used while portions 211 and 213 are not. Alternatively, bulkhead 207 is identical to bulkhead 206.

Portions 210, 211, 212, 213 and 214 are fabricated from a sturdy, light-weight, material formed into substantially circular and annular members by methods that include, but are not limited to, casting, forging and machining. In the exemplary embodiment, portions 210, 211, 212, 213 and 214 are fabricated as unitary members that are substantially circular and annular that substantially conform to surface 218 and bearings 152 and 154. Alternatively, portions 210, 211, 212, 213 and 214 may be formed as a plurality of substantially arcuate members (not shown in Figure 3) and coupled together during assembly of nacelle 106. Portions 210, 211, 212, 213 and 214 are coupled together to form bulkheads 206 via retention hardware methods that include, but are not limited to, riveting and bolting. Alternatively, welding methods may be used to couple portions 210, 211, 212, 213 and 214 together.

Figure 4 is an expanded schematic view of a portion of exemplary semi-monocoque structure 200 (shown in Figure 3) taken along area 4. Portion 226 is illustrated fastened to a stationary portion 236 of bearing 152. A plurality of bearing roller portions 238 and shaft 134 are illustrated for perspective. Portion 230 is fastened to bearing portion 236 in a similar manner. Portion 228 is illustrated fastened to web portion 212. Portion 232 is fastened to portion 212 in a similar manner. Access passage 234 is illustrated for perspective. Portions 226 and 230 receive vibration and other loads from bearing portion 236 and transfer these loads to web portion 212 for subsequent transfer to shell surface 218 (shown in Figure 3).

Referring to Figure 3, stringers 208 are fabricated from a sturdy, light-weight, material formed into members that substantially conform to shell interior surface 218 by methods that include, but are not limited to, casting, forging and machining. In the exemplary embodiment, stringers 208 are fabricated as substantially right-angular unitary members 208 similar to standard angle iron. Also, in the exemplary embodiment, stringers 208 are inserted through stringer passages (not shown in Figure 3) defined within bulkheads 206 and 207 such that stringers 208 extend along shell inner surface 218 for substantially the longitudinal length of nacelle 106. Stringers 208 and bulkheads 206 and 207 are coupled within the stringer passages such that loads received by stringers 208 and bulkheads 206 and 207 are transferred to a broad expanse of shell 202 as discussed further below. Alternatively, stringers 208 may be formed as a plurality of members (not shown in Figure 3) sized to form an interference fit with bulkheads 206 and 207 during nacelle 106 assembly in a manner that facilitates efficient load transfers between bulkheads 206 and 207 and stringers 208.

Bulkheads 206 and 207 and stringers 208 are coupled to interior surface 218 of outer shell 202 via retention hardware methods that include, but are not limited to, riveting and bolting. Alternatively, welding methods may be used to couple bulkheads 206 and 207 and stringers 208 to surface 218.

Bulkheads 206 and 20,7 and stringers 208 are fabricated from materials that include, but are not limited to aluminum alloys, steel alloys or any other materials that attain predetermined operational parameters. Operational parameters include, but are not limited to, providing sufficient material strength to withstand local environmental conditions, collecting loads from components within nacelle 106, and efficiently and effectively transferring the loads to shell 202.

In operation, loads associated with shaft 134 and equipment coupled to shaft 134 are transferred into concentric portions 226 and 230 of inner radial portions 212 and 213, respectively, of bulkheads 206 and 207. For example, rotational and bending loads of blades 112 (shown in Figure 1) that are transferred to shaft 134 via hub 110 (shown in Figure 1 and 2) as illustrated by the associated arrows are transferred to bulkheads 206 and 207 via concentric portions 226 and 230 of inner radial portions 212 and 213 as described above. From portions 226 and 230 the loads are transferred to orthogonal portions 228 and 232 that subsequently transfer the loads to web portions 214. The loads are transferred from web portions 214 to orthogonal portions 220 and 224 of outer radial portions 210 and 211, respectively. From portions 220 and 224, the loads are transferred to concentric portions 216 and 222, respectively. The loads are substantially evenly distributed throughout shell 202 concentrically via portions 216 and 222 and longitudinally via stringers 208 through surface 218. Additional components positioned within nacelle 106 may also be coupled to shell 202 in a similar manner as discussed above to further facilitate efficient and effective load transfer within wind turbine 100.

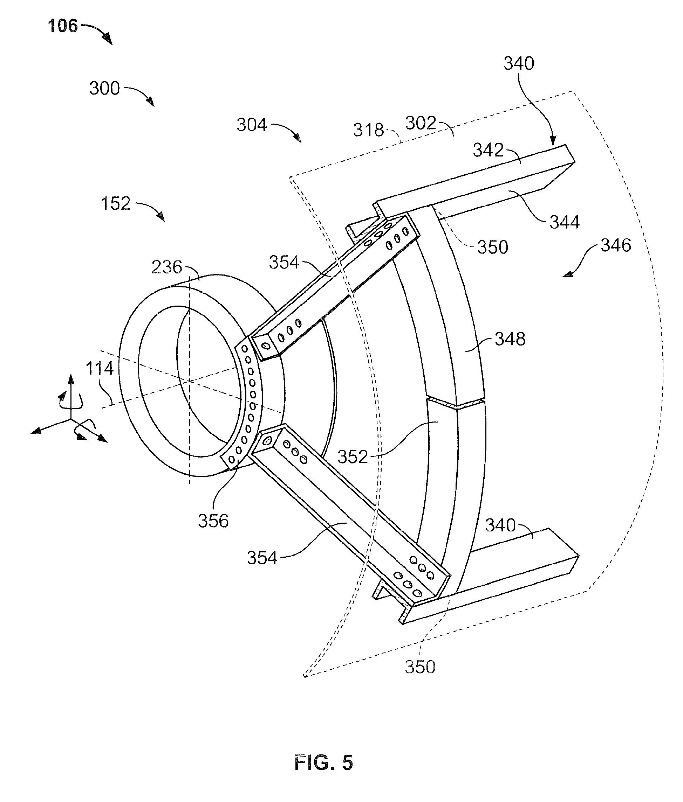

Figure 5 is a fragmentary schematic view of an alternative semi-monocoque structure 300 that may be used with nacelle 106. Axis of rotation 114 is illustrated for perspective. Structure 300 includes an outer shell 302 and a plurality of internal support members 304, i.e., a shell reinforcement and load transfer system 304. Shell 302 is substantially similar to shell 202 (shown in Figure 3) and includes inner surface 318. System 304 includes a plurality of Longerons 340 (only two illustrated in Figure 5) that extend longitudinally along inner surface 340. Longerons 340 include a radially outer surface 342 and an orthogonal surface 344 that is substantially perpendicular to surface 342. Surface 342 is coupled to surface 318 via methods that include, but are not limited to retention hardware and welding. Longerons 340 are similar in function to stringers 208 (shown in Figure 3) with the exception that Longerons 340 are more robust than stringers 208 and can transfer larger loads.

In the exemplary embodiment, Longerons 340 are fabricated to substantially resemble standard U-beams. Alternatively, Longerons 340 may be fabricated in any shape. Also, in the exemplary embodiment, Longerons 340 extend along shell inner surface 318 for substantially the longitudinal length of nacelle 106. Alternatively, Longerons 340 may extend only partially along the longitudinal length of nacelle 106.

System 304 also includes a plurality of alternative bulkheads 346 (only one illustrated in Figure 5). Bulkheads 346 include a radially outer surface 348, a plurality of circumferential orthogonal surfaces 350 and an axial orthogonal surface 352. Surfaces 350 and 352 are substantially perpendicular to surface 348. Surface 348 is coupled to surface 318 via methods that include, but are not limited to retention hardware and welding.

In the exemplary embodiment, bulkheads 346 are fabricated to substantially resemble standard U-beams. Alternatively, bulkheads 346 may be fabricated in any shape. Also, in the exemplary embodiment, bulkheads 346 extend along shell inner surface 318 for substantially the circumferential perimeter of nacelle 106. Alternatively, bulkheads 346 may extend only partially along the circumferential perimeter of nacelle 106.

System 304 further includes a plurality of bulkhead extension segments 354. In the exemplary embodiment, segments 354 are fabricated as substantially right-angular unitary members 354 similar to standard angle iron. Alternatively, segments 354 may be fabricated in any shape. Segments 354 are coupled to bulkhead 346 at surface 352 and Longeron 340 at surface 344 via methods that include, but are not limited to retention hardware and welding.

System 304 also includes a plurality of bearing cover plates 356 (only one illustrated in Figure 5). Plates 356 are substantially annular and extend over at least a portion of stationary portion 236 of bearing 152. Segments are coupled to plates 356 and plates 356 are coupled to bearing portion 236 via methods that include, but are not limited to retention hardware and welding.

Longerons 340, bulkheads 346, segments 354 and plates 356 are fabricated from a sturdy, light-weight, material formed by methods that include, but are not limited to, casting, forging and machining. These materials include, but are not limited to, aluminum alloys, steel alloys or any other materials that attain predetermined operational parameters. Operational parameters include, but are not limited to, providing sufficient material strength to withstand local environmental conditions, collecting loads from components within nacelle 106, and efficiently and effectively transferring the loads to shell 302.

In operation, loads associated with shaft 134 (shown in Figure 3) and equipment coupled to shaft 134 are transferred into plates 356. Moreover, blades 112 (shown in Figure 1) rotational and bending loads transferred to shaft 134 via hub 110 (shown in Figures 1 and 2) as illustrated by the associated arrows are also subsequently transferred to plates 356. From plates 356, the loads are transferred to segments 354 that subsequently transfer the loads to bulkheads 346 and Longerons 340. The loads are substantially evenly distributed throughout shell 302 concentrically via bulkhead surface 348 and longitudinally via Longeron surface 342 through surface 318. System 304 may also include stringers (not shown Figure 5) that function in a manner similar to that of stringers 208 (shown in Figure 3).

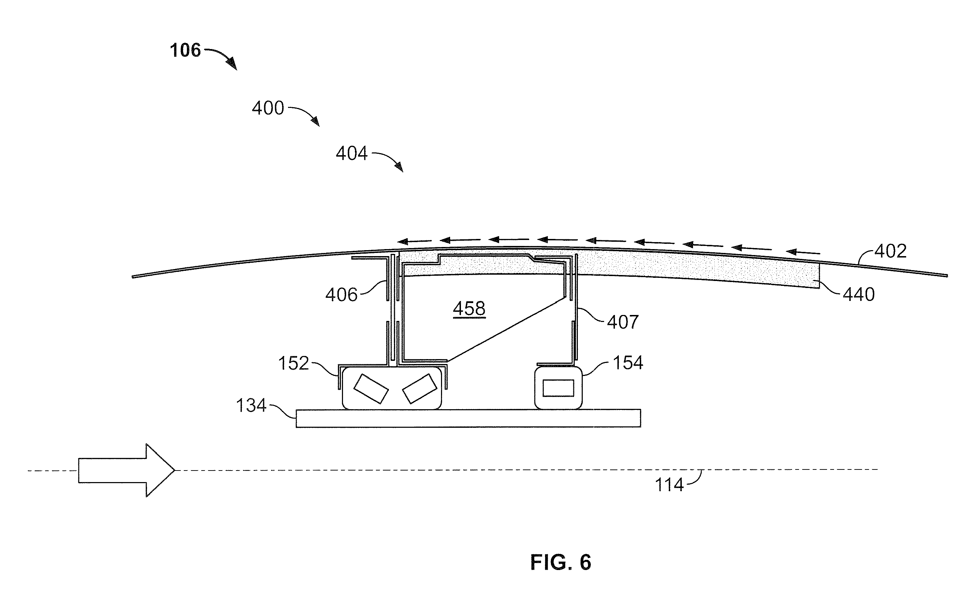

Figure 6 is a fragmentary cross-sectional schematic view of an alternative semi-monocoque structure 400 that may be used with nacelle 106. Axis of rotation 114 is illustrated for perspective. Structure 400 includes an outer shell 402 that is substantially similar to shell 202 (shown in Figure 3). Structure 400 also includes a shell reinforcement and load transfer system 404 that further includes at least one each of bulkheads 406 and 407 that are substantially similar to bulkheads 206 and 207, respectively (both shown in Figure 3). Structure 400 further includes at least one Longeron 440 that is substantially similar to Longeron 340 (shown in Figure 5). Structure 400 also includes at least one gusset 458 that extends axially between bulkheads 406 and 407 to provide additional axial load support for structure 400. Gusset 458 is fabricated by methods and from materials similar to those used for other components as described above. System 404 may also include stringers (not shown in Figure 6) that function in a manner similar to that of stringers 208 (shown in Figure 3).

In operation, loads associated with shaft 134 and equipment coupled to shaft 134 are transferred into bulkheads 406 and 407. Moreover, blades 112 (shown in Figure 1) rotational and bending loads transferred to shaft 134 via hub 110 (shown in Figures 1 and 2) are also subsequently transferred to bulkheads 406 and 407. Furthermore, wind thrust loads as illustrated by the associated arrow are transferred to bulkheads 406 and 407. From bulkheads 406 and 407, the loads are transferred to shell 402 and Longeron 440. The loads are substantially evenly distributed throughout shell 302 concentrically via bulkheads 406 and 407 and longitudinally via Longeron 440. Shear stresses within shell 402 due to the wind thrust are illustrated by the associated arrows. This effect will also be achieved with the aforementioned embodiments of structure 400, i.e., structure 200 (shown in Figure 3) and 300 (shown in Figure 5).

In general, any combination of semi-monocoque structure components as described herein may be used within nacelle 106 to attain predetermined operational parameters as also described herein.

The methods and apparatus for a wind turbine generator nacelle described herein facilitate operation of a wind turbine generator. More specifically, the wind turbine generator semi-monocoque nacelle structure as described above facilitates an efficient and effective mechanical load transfer scheme. Also, the robust, nacelle structure facilitates decreased capital construction costs. Such nacelle structure also facilitates wind turbine generator reliability, and reduced maintenance costs and wind turbine generator outages.

Exemplary embodiments of wind turbine nacelle structures as associated with wind turbine generators are described above in detail. The methods, apparatus and systems are not limited to the specific embodiments described herein nor to the specific illustrated wind turbine generators.

While the invention has been described in terms of various specific embodiments, those skilled in the art will recognize that the invention can be practiced with modification within the spirit and scope of the claims.

### PARTS LIST

| | |
|---|---|
| 100 | wind turbine generator |
| 102 | tower |
| 104 | supporting surface |
| 106 | nacelle |
| 108 | rotor |
| 110 | hub |
| 112 | blades |
| 114 | axis of rotation |
| 116 | axis |
| 118 | pitch axis |
| 120 | blade root portion |
| 122 | load transfer regions |
| 130 | pitch drive mechanisms |
| 132 | generator |
| 134 | main rotor shaft |
| 136 | gearbox |
| 138 | high speed shaft |
| 140 | coupling |
| 142 | supports |
| 144 | supports |
| 146 | yaw adjustment mechanism |
| 148 | meteorological mast |
| 150 | control panel |
| 152 | bearings |
| 154 | bearings |
| 200 | semi-monocoque structure |
| 202 | shell |
| 204 | internal support members |
| 206 | bulkhead |
| 207 | bulkhead |
| 208 | longitudinal stringers |
| 210 | outer portion |
| 211 | outer portion |
| 212 | inner portions |
| 213 | inner portions |
| 214 | web portion |
| 216 | coupling portions |
| 218 | shell surface |
| 220 | orthogonal portion |
| 222 | concentric portion |
| 224 | orthogonal portion |
| 226 | concentric portions |
| 228 | orthogonal portion |
| 230 | concentric portion |
| 232 | orthogonal portion |
| 234 | access passage |
| 236 | bearing portion |
| 238 | bearing roller portions |
| 300 | semi-monocoque structure |
| 302 | shell |
| 304 | load transfer system |
| 318 | inner surface |
| 340 | Longeron |
| 342 | outer surface |
| 344 | orthogonal surface |
| 346 | bulkheads |
| 348 | outer surface |
| 350 | orthogonal surfaces |
| 352 | orthogonal surface |
| 354 | segments |
| 356 | plates |
| 400 | semi-monocoque structure |
| 402 | outer shell |
| 404 | load transfer system |
| 406 | bulkheads |
| 407 | bulkheads |
| 440 | Longeron |
| 458 | gusset |

## Claims

1. A wind turbine generator (100) comprising:
at least one rotating member; and
a semi-monocoque nacelle structure (200) comprising at least one stationary member extending over at least a portion of said rotating member.

2. A wind turbine generator (100) in accordance with Claim 1 wherein said semi-monocoque nacelle structure (200) further comprises:
an outer shell (202) extending over at least a portion of said structure, said shell comprising an inner surface (212, 213);
at least one circumferential member coupled to said shell surface; and
at least one longitudinal member (208) coupled to said shell surface and said circumferential member.

3. A wind turbine generator (100) in accordance with Claim 2 wherein said outer shell (202) comprises a plurality of enclosure members coupled together by at least one of retention hardware and welds.

4. A wind turbine generator (100) in accordance with Claim 3 wherein said enclosure members comprise a plurality of stamped metal sheets.

5. A wind turbine generator (100) in accordance with any one of Claims 2 to 4 wherein said circumferential member comprises at least one bulkhead (206, 207).

6. A wind turbine generator (100) in accordance with Claim 5 wherein said bulkhead (206, 207) comprises at least one of:
a unitary member; and
a plurality of portions coupled together by at least one of retention hardware and welds.

7. A wind turbine generator (100) in accordance with Claim 5 or Claim 6 wherein said bulkhead (206, 207) comprises a web plate (356), said web plate defines at least one of:
an access passage (234); and
a longitudinal member passage.

8. A wind turbine generator (100) in accordance with any one of Claims 5 to 7 wherein at least a portion of said bulkhead (206, 207) is coupled to at least a portion of a wind turbine generator component housing by at least one of:
a direct coupling by at least one of retention hardware and welding; and
a substantially radial member coupled to said wind turbine generator component housing and said bulkhead and extending therebetween.

9. A semi-monocoque structure (200) for a rotary machine comprising:
an outer shell (202) extending over at least a portion of said structure, said shell comprising an inner surface (212, 213);
at least one circumferential member coupled to said shell surface; and
at least one longitudinal member coupled to said shell surface and said circumferential member.

10. A structure (200) in accordance with Claim 9 wherein said outer shell (202) comprises a plurality of enclosure members coupled together by at least one of retention hardware and welds.
